# EUROPEAN PATENT APPLICATION

(11) **EP 1 050 800 A1**
(43) Date of publication of application: **08.11.2000**
(21) Application number: 99410044.4
(22) Date of filing: 03.05.1999
(51) Int. Cl.: G06F 9/38, G06F 9/30

(54) **A pipelined execution unit**

(71) Applicant: STMicroelectronics SA, 94250 Gentilly (FR)
(72) Inventor: Cofler, Andrew, 38340 Voreppe (FR); Ducousso, Laurent, 38330 Saint Nazaire les Eymes (FR); Fel, Bruno, 38360 Sassenage (FR)
(74) Representative: Driver, Virginia Rozanne

(57) **Abstract**

A pipelined execution unit includes a data operand fetch stage, two execution stages and a data writeback stage. The stages of the pipeline are connected to a data register file which has a plurality of ports distributed through the pipeline. The data register file has the property that a data value written into the data register file at one of the ports during a cycle of operation is available to be read from a different port in the same cycle. This allows the pipeline to be designed efficiently for its various operations.

## Description

The invention relates to a pipelined execution unit in a computer system.

The computer system described herein uses pipelined execution units for data manipulations. The pipelined execution unit obtains operands comprising data values to be manipulated, and opcode defining a manipulation to be executed. It stores resulting data values.

The computer system described herein has a pipelined execution unit which communicates predominantly with a data register file from which operands are fetched for manipulation, and to which resultant values are written. Normally, data values which are needed in the data register file are loaded there from a main memory via a load data queue. Resultant values which are to be written back to memory are firstly written into the data register file and then stored back to main memory from there via a store data queue.

It is an aim of the present invention to improve the performance of a pipelined execution unit in relation to its cooperation with the data register file.

According to one aspect of the present invention there is provided a pipelined execution unit for executing instructions which identify operands and include opcode defining how the operands are to be manipulated, the execution unit comprising: a data operand fetch stage connected to fetch operands from a data register file; at least one execution stage connected to receive operands from the data operand fetch stage and to manipulate the operands in dependence on the opcode; and a data write back stage connected to a data register file for writing back the results of the execution stage to the data register file, wherein the data register file includes a plurality of ports distributed through the pipelined execution unit and has the property that a data value written into the data register file at one of said ports during a cycle of operation is available to be read from a different one of said ports in the same cycle.

The pipelined execution unit can have a first addressable read port located in the data operand fetch stage and a first write port located at the output of the execution stage so that the results of the execution stage are available to the data operand fetch stage in a single cycle of operation.

A second write port can be located at the output of the data operand fetch stage and connected to receive data values from a load data queue which holds data values received from a main memory.

A second addressable read port can be located in the execution stage so that results of the execution stage can be read from the data register file in the same cycle for storing back to memory in the same cycle that they are written to the data register file.

The pipelined execution unit can have first switching circuitry arranged in the execution stage to selectively connect either the output of the execution stage or the output of the second addressable read port to the store data queue such that the store data queue can be simultaneously updated with the data register file when the output of the execution stage is selected. The first switching circuitry can be responsive to a data dependency control signal (Hdep).

A set of switches can be connected to the outputs of the first addressable read port of a data register file and to the output of the load data queue to selectively supply operands from the load data queue or from the data register file to the execution stage.

The set of switches can be responsive to the data dependency control signal (Hdep)which thus determines whether operands are received from the load data queue or from the data register file.

Operands may also be available in the instructions themselves as immediate values.

The load data queue can be connected to the data register file such that when the execution stage receives an operand from the load data queue, the data register file is simultaneously updated.

The pipelined execution unit can include more than one execution stage, connected in series. The execution stages can comprise a combination of arithmetic logical units and/or multiply accumulate units.

The invention also provides a method of operating a pipelined execution unit to execute a sequence of instructions which each identify operands and include opcode defining how the operands are to be manipulated, the method comprising; writing the result of execution of an instruction to a data register file, and fetching that result from the data register file for use as an operand in a subsequent execution cycle, wherein the result is written into the data register file and fetched from the data register file in the same execution cycle.

According to another aspect, there is provided a method of operating a pipelined execution unit to execute a sequence of instructions which each identify operands and include opcode defining how the operands are to be manipulated, in which method an operand is fetched from a load data queue which holds data values received from a main memory and supplied to an execution stage of the pipeline simultaneously with updating a data register file connected to the pipelined execution unit.

According to a further aspect there is provided a method of operating a pipelined execution unit to execute a sequence of instructions which each identify operands and include opcode defining how the operands are to be manipulated, in which method the result of execution of an instruction is written to a data register file and is read out of that data register file in the same execution cycle to be stored back to memory.

The invention also provides a computer system which uses a pair of parallel pipelined execution units for manipulating data values.

For a better understanding of the present invention and to show how the same may be carried into effect, reference will now be made by way of example to the accompanying drawings in which:
Figure 1 is a diagram of a computer system in accordance with an embodiment of the invention;
Figure 2 is a schematic diagram illustrating the communication path for the pipelined execution units;
Figures 3a to 3c represent different stages in pipelined operation;
Figure 4 is a circuit diagram illustrating the location of the data register file with respect to the stages of the pipeline; and
Figure 5 is a diagram showing the formats of different instruction modes which can be used with the system of Figure 1.

The computer system of this example is arranged for the parallel execution of a plurality of instructions and is particularly suited to providing a high digital signal processing (DSP) performance. Instructions are held in a program memory 11 and after passing through a control unit 12 are supplied to four parallel execution pipelines 13,14,15 and 16. Pipelines 13 and 14 are shown as slot 0 and slot 1 of a data unit 18 arranged to execute instructions carrying out arithmetic operations. Pipelines 15 and 16 are shown as slot 0 and slot 1 of an address unit 19 used to execute instructions for memory accesses to a data memory 20. Instructions can also be supplied to a general unit 21 which shares some resources with the address unit 19. The general unit 21 includes a control register file 5 and branch circuitry and is used to provide instruction branch information on line 23 to the control unit 12.

The two pipelines 13 and 14 in the data unit 18 share a common data register file 26 and a common guard register file 27 holding guard values which may be associated with the instructions. The two pipelines also derive instructions from a common instruction dispatch queue 29 in the data unit 18 and instructions in the queue 29 are checked for data dependency by common dependency check circuitry 30 in the data unit 18. This dependency check refers to data dependency between instructions taken off the queue 29 in successive cycles into the same pipeline and is referred to as a vertical dependency. The sequence of operations in each of the pipeline stages of the data unit 18 are illustrated schematically as a first stage 30 which is a data operand fetch usually accessing one of the register files 26 and/or 27. Two successive execution stages 31 and 32 may occur in subsequent cycles using for example ALU units 33 or a multiply and accumulate unit 34. The second execution stage 32 is followed by a data write back stage 35 at which the result of an arithmetic operation is returned to the register file 26 or 27. A similar pipeline exists for the other pipeline of the data unit 18.

Similarly for the address unit 19, both pipelines 15 and 16 access a common pointer register file 40 holding pointer values for use in load or store operations in the data memory 20. The two pipelines each take their instructions from a common instruction dispatch queue 41 and a similar vertical dependency check is provided in common for both pipelines 15 and 16 through the address unit 19. The vertical dependency check 42 is similar to that referred to as the vertical dependency check 30 in the data unit. In executing instructions which are taken through the two pipelines 15 and 16, accesses will be made to the register file 40 and add and subtract units 43 may be used by the two pipelines. Each of the pipelines in the address unit has pipeline stages as illustrated. The first stage is an address operand fetch 44 followed by an execution stage 45 and an address write back stage 46. In both the pipelines of the data unit 18 and the address unit 19 bypass circuitry 47 is provided to allow bypassing of some stages of the pipeline.

Both the data unit 18 and the address unit 19 are connected to the data memory 20 through a data memory interface control 50 and a data memory controller 51. The data memory interface control 50 is connected by two unidirectional buses 53 to both the data unit 18 and address unit 19. The interface control 50 includes a plurality of queues each connected by a bus to the bus 53. These queues include load data queues 60 and 61 for slots 0 and 1 respectively. Queues 62 and 63 hold pointer values to be transferred to data registers for slot 0 and slot 1. Queues 64 and 65 hold data values for transfer to pointer registers for slots 0 and 1.

The data memory controller 51 includes store data queues 70 and store address queues 71.

It will be understood that in normal operation, i.e. without using the enhanced properties of the pipelines described later, when instructions are executed to load data from the data memory 20 into the data register files of the data unit 18, the address unit 19 will access the data memory 20 and load the required data into the load data queues 60 or 61 prior to completing the update of the data register file 26 by transferring the data from the appropriate queue 60 or 61. Similarly when instructions are executed to store data from the data unit 18 into the data memory 20 the appropriate data may be held in the store data queues 70 together with the store addresses in queue 71 prior to completing the store operation in the data memory 20.

It will be appreciated that by executing the memory addressing instructions in the address unit 19 in separate parallel pipelines from those provided in the data unit 18, the computer system operates access decoupling in that the memory access are effected independently of the arithmetic operations carried out within the data unit 18. This reduces the problem of memory latency. In a digital signal processing system which operates regular and repeated operations, the effective memory latency can be hidden from the executing program.

In the above description, all instructions which are fed through pipelines 13, 14, 15 and 16 are subject to a hardware check on possible vertical dependency. This is carried out in known manner for execution units. However, the pipeline construction described herein allows continuous operation even with vertical dependencies by allowing the result of the execution stage to be "visible" to the data operand fetch stage at the next cycle.

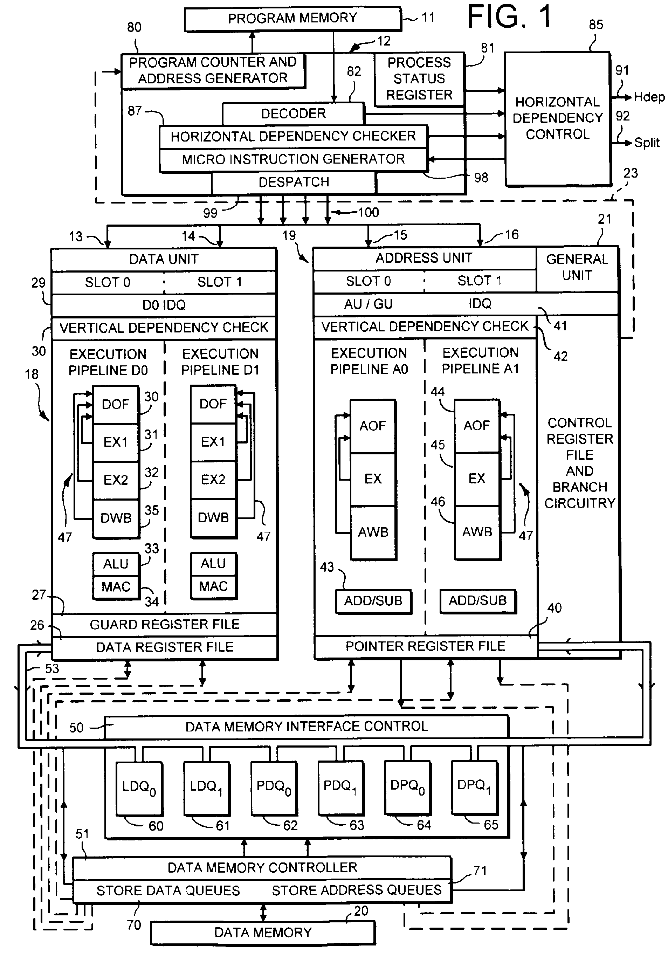

The control unit 12 shown in Figure 1 is also arranged to provide a horizontal dependency check. In this specification a data and/or guard dependency between instructions that are supplied to the parallel pipelines in the same machine cycle is referred to as a horizontal dependency. The control unit 12 includes a program counter and address generator 80 to provide a memory address for an instruction fetch operation from the program memory 11. The control unit includes a process status register 81 which includes two bits to indicate the instruction mode in which the machine is operating at any instant. The machine may operate in a selected one of a plurality of modes including superscalar modes of variable instruction bit length or in very long instruction word (VLIW). Examples of the different modes of this example are shown in Figure 5. According to a first instruction mode, a pair of 16 bit instructions are supplied during each machine cycle to a decoder 82 in the control unit 12. This pair is denoted as slot 0, slot 1 with a bit sequence W0, W1 etc. Each bit sequence W0, W1 is issued in one machine cycle and this mode is referred to herein as GP16 mode which is a superscalar mode.

According to a second superscalar instruction mode, two instructions each having a length of 32 bits are supplied to the decoder 82 in each machine cycle. In this case both bit sequences W0 and W1 are issued in cycle 0 and bit sequences W2 and W3 are issued in cycle 1. This mode is referred to herein as GP32 mode.

According to a third instruction mode four instructions are formed by the bit sequences W0, W1, W2 and W3 each of 32 bits in length. These are supplied in a single cycle as a result of a single fetch operation to the decoder 82. This is referred to herein as a VLIW mode.

The encoding of GP16 and GP32 instructions are completely different. A VLIW instruction is formed of four GP32 instructions.

In both GP16 and GP32 mode, only two instructions are supplied to the execution pipelines during each cycle. Those two instructions are designated slot 0 and slot 1 and cause microinstructions to be generated for the data unit and/or the address unit. Hardware circuitry in Figure 1 checks for both vertical and horizontal dependency of microinstructions supplied to the pipelines.

In the case of the VLIW mode dependency checks are carried out by hardware in Figure 1. Instructions which can be grouped together in a single word in VLIW mode are governed by specified rules of instruction compatibility. Although Figure 5 refers to slots 0-3 for VLIW mode, it will be understood that the four slots in question correspond to the two slots of the data unit and the two slots of the address unit. Consequently the grouping of the instructions within the VLIW word must always include zero, one or two instructions for the address unit and zero, one or two instructions for the data unit. One of the address unit slots of the VLIW mode may include a control instruction for use by the general unit 21.

When the instructions obtained by a single fetch operation in one cycle are decoded by the decoder 82, they are checked for horizontal data dependency by dependency checking circuitry 87. The checker 87 provides an output to the control circuit 85 to indicate if a horizontal data dependency has been located. The checker 87 is fed to a selector circuit 90 which provides either an Hdep signal on line 91 or a split signal on line 92 depending on the instructions which have been decoded by the decoder 82. The split signal 92 indicates that a split in the operation of a pair of parallel execution pipelines is necessary in order to resolve a horizontal dependency, and is not discussed further herein. Hdep indicates that there is a dependency which can be resolved by the pipeline construction, without the need for a temporary stall in operation of the pipeline.

Instructions from the decoder 82 are passed to a microinstruction generator 98 which generates a plurality of parallel microinstructions which are output by a dispatch circuit 99 through lines 100 to the four parallel execution pipelines 13,14,15 and 16. The format of the microinstructions is independent of the instruction mode of the machine. In the event that the split signal 96 has been enabled, a split bit will be set in the microinstruction passed to the respective execution pipeline so that the data and/or guard dependency can be resolved.

If the decoder 82 indicates that the horizontal dependency problem arises from conflict between an arithmetic operation in the data unit together with either a load or a store in the data unit then the horizontal dependency control 85 will provide an output on line 91 indicating Hdep rather than a split signal on line 92. In the described embodiment, the signal Hdep on line 91 is provided only in relation to microinstructions supplied to the data unit 13. However, it could be supplied to the address unit as well. The microinstruction generator 98 will include an indication in the microinstructions that Hdep from line 91 has been set. The Hdep indication is supplied to the instruction dispatch queue 29 of the data unit 18 as part of the microinstructions. When a pair of instructions are taken from the queue 29 into the two parallel pipelines of the data unit 18, the indication of Hdep will be responded to by the execution stages of one of the pipelines by activating a bypass circuit to avoid cycles of operation which would otherwise have caused a data dependency problem.

In one example, one pipeline 13 of the data unit 18 may be executing an instruction to load a value into a register in the register file 26 while the other pipeline 14 is attempting to use the value of that data register as an operand in an arithmetic operation. The use of the Hdep signal in the microinstruction will indicate to the arithmetic operation attempting to locate the correct operand that it is not necessary to stall the pipeline as the value it requires as an operand will already be available from a load data queue 60. Consequently the execution of the arithmetic operation in pipeline will seek the correct operand directly from the load data queue 60 as that data is immediately available and there is no need to stall the arithmetic operation until the value has been loaded into the data register file 26 by the instruction being executed in the parallel pipeline 13. Similarly, if one of the pipelines in the data unit is attempting to store data from a particular register while the parallel pipeline is executing an arithmetic operation to generate a new value for the register, it is possible to bypass directly from the second execution stage to the store data queue 70. It is not necessary to stall one of the pipelined operations to allow the data to be written into the data register file 26 before it is removed from the DRF 26 to be put on to a store data queue 70.

An example of a read after write horizontal dependency which can be resolved by use of the Hdep indication is as follows:

| | | |
|---|---|---|
| Assembly | R1 = [P1]; | (a load of R1 from the data memory at address P1) |
| | RO = R1; | |

DU µ-instrs (assuming aligned slot 0/1):

| RAW horizontal dependency on R1 - Hdep set by CU | |
|---|---|
| DU1 | DUO |
| RO = R1 | R1 = [P1] |

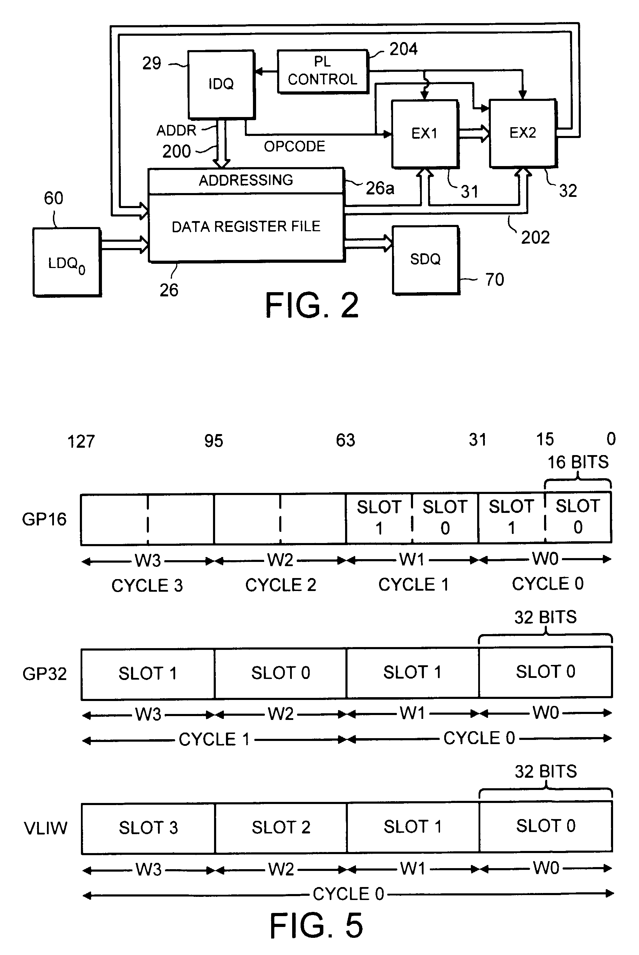

Figure 2 is a diagram which illustrates schematically the principles of operation of the data unit pipelines D0, D1. Only one of the pipelines is illustrated in Figure 2. Figure 2 illustrates that the data register file 26 includes addressing circuitry 26a which allows particular registers in the data register file 26 to be accessed. The data unit instruction dispatch queue 29 issues addresses to the data register file 26 along address bus 200. The instruction dispatch queue 29 can issue a plurality of addresses to the data registe-r file in each machine cycle. Each instruction can consist of up to three source operands and one destination operand. So each instruction can issue three addresses to the data register file 26 in each machine cycle in the operand fetch stage. In addition, the second execution stage may, in the same machine cycle read an operand for an earlier store operation. Thus, up to eight read addresses may be issued to the data register file 26 in each machine cycle, with up to two write accesses. To allow this for two pipelines the data register file 26 has eight read ports and four write ports.

The data register file outputs data values from the addressed registers along data bus 202 to the execution stages 31,32. The instruction dispatch queue 29 also issues opcode to the execution stages 31,32. The output of the second execution stage 32 is connected back to the data register file 26 so that the results of operations of the execution stages 31,32 can be loaded into the data register file at the appropriately addressed register. The operational timing of the pipeline is under control of the pipeline control unit 204.

The data register file 26 is additionally in communication with the load data queues 60,61 and the store data queues 70. Note that only a single load data queue is illustrated in Figure 2 for illustrative purposes. The loading of data in and out of the data register file from the load data queue and to the store data queue is under control of the data memory interface control 50 and the data memory controller 51 as already mentioned earlier.

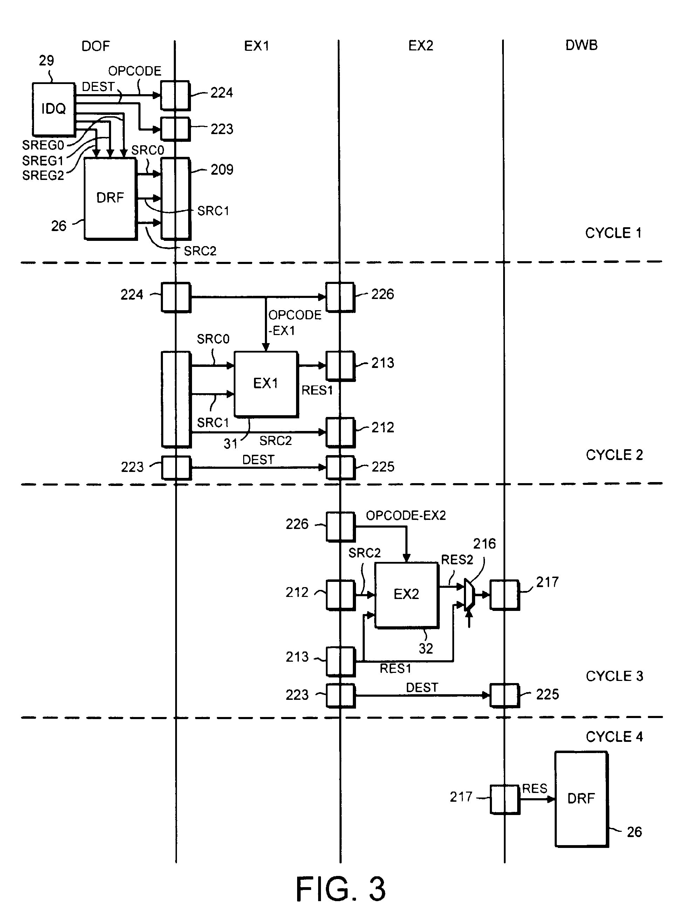

The general principles of timing of operation of the pipeline will now be described with reference to Figure 3.

In cycle 1 source addresses SREG0,SREG1,SREG2 are supplied from the IDQ 29 to the data register file 26 which correspondingly supplies operands SRC0,SRC1,SRC2 to a set of flip-flops 209 on the boundary between the DOF stage and the first execution unit 31. Opcode from a microinstruction in the IDQ 29 is supplied to a flip-flop 224 on the same boundary. A destination address DEST is supplied to a flip-flop 223.

On cycle 2, first and second operands SRC0,SCR1 are supplied to the first execution unit 31 together with any opcode relevant to that unit. In addition the opcode is propagated through the pipeline by latching into a further flip-flop 226 on the boundary between the first and second execution stages. The first execution unit 31 manipulates the first and second operands SRC0,SRC1 in accordance with the opcode and provides a result RES1 to a flip-flop 213 on that boundary. Finally, in cycle 2 the third operand SRC2 is supplied to a flip-flop 212 on the boundary between the first and second execution stages, and the destination address DEST is supplied to a flip-flop 225.

In cycle 3, the third operand SRC2 is supplied to the second execution stage 32 together with the opcode. The second result RES2 is generated by the second execution unit 32 and can be supplied by a multiplexor 216 to a flip-flop 217 on the boundary between the second execution stage and the data write back stage. If there is no second result, the first result from the first execution stage EX 1 is propagated through the pipeline via the multiplexor 216. The destinationaddress DEST is supplied to a flip-flop 227.

In cycle 4, the result RES1 or RES2 is written back to the data register file 26 at the destination address DEST.

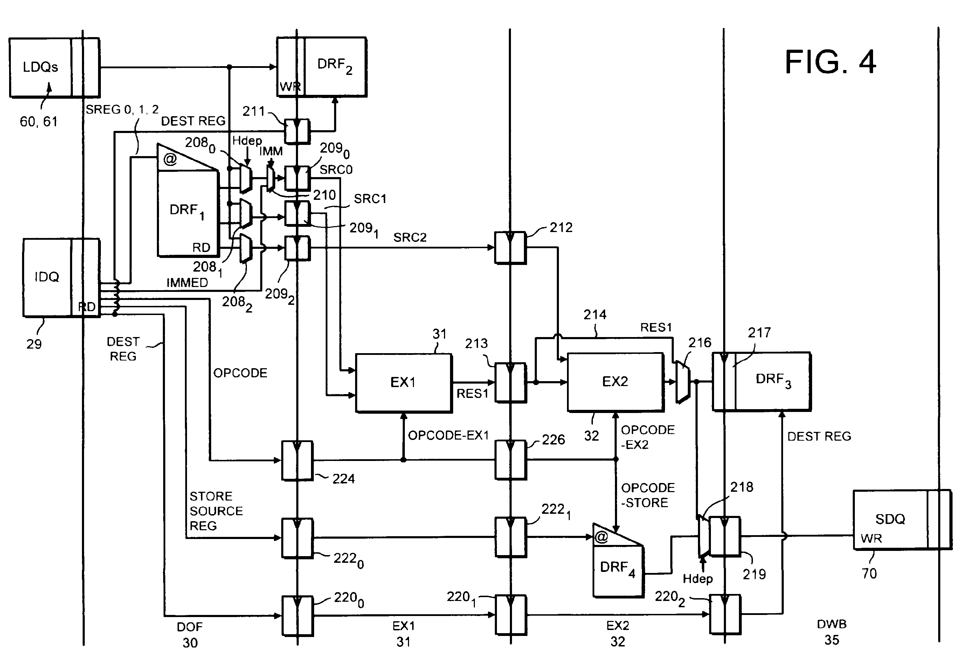

It will be appreciated that there are many different operations which the pipeline can carry out and therefore many different possible timings. The above is described by way of example to illustrate the basic principles of operation of the pipeline. It will be appreciated that the description of Figure 3 assume that the appropriate data is already in the data register file. Moreover, the data is returned to the data register file from where it can be written back to a data memory 20. The data can be supplied to the data register file 26 through the load data queues 60,61 and returned from the data register file to the memory 20 via the store data queues 70. The construction of the pipeline discussed in the following allows advantage to be taken of situations where the data which is required for a particular operation of the execution stages 31,32 is already in the load data queue but may not yet be in the data register file. Also, in the following described construction, data can be written back to the store data queue at the same time as the data register file is updated. Figure 4 is a diagram of such a pipeline construction.

Figure 4 illustrates the four pipeline stages 30,31,32,35 as described above with reference to Figure 1. The data register file 26 includes a number of ports which are shown distributed through the pipeline to illustrate the principles of the pipeline construction. The first port DRF₁ can be considered as part of the data operand fetch stage 30 of the pipeline and outputs data operands responsive to the register addresses SREG0,SREG1,SREG2. The operands SRC0,SRC1,SCR2 are supplied via respective multiplexors 208₀,208₁,208₂ and flip-flops 209₀,209₁,209₂ to the first and second execution stages 31,32. The multiplexors 208₀,208₁,208₂ are also connected to receive operands from the load data queues 60,61. The output of the load data queues 60,61 is also connected to the write input of a second port DRF₂ of the data register file to write in operands or results at a destination register defined by the dest_reg field of an instruction in the IDQ 29. The dest_reg address is supplied via a flip-flop 211. This allows data supplied to the execution stages 31,32 from the load data queues 60,61 to simultaneously update the data register file DRF₂. Thus, when the required operands are available on the load data queues 60,61 as indicated by the Hdep signal, this allows a cycle of operation to be saved because the data can be loaded into first execution stages 31,32 while the data register file 26 is simultaneously updated. The Hdep signal is derived from the microinstruction in the IDQ 29.

A multiplexor 210 selectively supplies the first operand SRC0 to the first execution stage 31 or an immediate value IMMED which is obtained directly from the microinstructions in the IDQ 29. This is determined by a control signal imm applied to the multiplexor 210 which is derived from code in the microinstruction itself. A flip-flop 212 allows the operand SRC2 to be supplied to the second execution stage 32 if necessary. A flip-flop 213 allows the result RES1 generated by the first execution stage 31 to be supplied to the second execution stage 32. This may not always be necessary, and if the second execution stage 32 is not necessary, a bypass 214 can be implemented. The output of the second execution stage 32 and the bypass 214 are connected to a multiplexor 216, the output of which is used to update the data register file 26 at a third port thereof DRF₃. The address of the destination register is supplied from the IDQ as indicated by the address line dest_reg via a sequence of flip-flops 220₀,220₁,220₂. The output of the multiplexor 216 is supplied to a multiplexor 218 with attached flip-flop 219, the output of which is connected to the store data queue 70. The other input of the multiplexor 218 is connected to an output from a fourth port of the data register file DRF₄.

The source register addresses for a store operation are supplied to the data register file 26 at the port DRF₄ via flip-flips 222₀ and 222₁. The source register address is derived from the microinstruction. The microinstruction also contains opcode which is supplied to the first execution unit via a flip-flop 224 to second execution unit 32 via a flip-flop 226. In addition opcode causing a store operation is supplied to the data register file at the port DRF₄.

By implementing the data register file as a write to read asynchronous drop-through construction, time savings can be made in the pipeline by virtue of the construction illustrated in Figure 4.

For example a data value written to a destination register of the data register file 26 at the third port DRF₃ as a result of execution by the execution stages is available as an operand in the DOF stage from the first port DRF₁ in the same cycle of operation. Also, location of DRF₄ in the second execution stage allows the update of a register in the data register file 26 (by the DWB stage at port DRF3) to be seen by the read of the same register for a store by the port DRF₄ in the EX 2 stage. For example:

| | |
|---|---|
| program: R4=R1+R2 | (instr on 1st cycle, assuming that there is only a DU0) |
| [mem]=R4; | (instr on 2nd cycle) |

When the instruction R4=R1+R2 is in the DWB stage (R4 is written into the data register file at DRF₃), instruction [mem]=R4 is one cycle behind in the EX2 stage, and so is reading the data register file to obtain the value of R4 (or DRF₄). Because of the drop through, it reads the correct value of R₄ (i.e. the one that is being simultaneously updated in the DWB stage).

The connection of the second port DRF₂ with respect to the load data queues 60,61 allows the data register file to be updated simultaneously as data from the load data queue is supplied to the first execution unit 31 when the Hdep signal is set as decoded from the microinstruction.

The location of block DRF₃ with respect to the second execution stage 32 and the multiplexor 218 connecting its output to the store data queue 70 allows write-back to the store data queue to occur in the same cycle as updating a data register file by the results of the second execution unit 32.

It will be appreciated from the description already given of Figure 2, that the WR input labelled on the second port DRF₂ illustrates the updating of the data register file from the load data queue at the register identified by the dest reg address. That is, an address is supplied to the data register file at which data from the load data queues 60,61 is written. Also, the opcode-store input of the fourth port DRF₄ illustrates the store function of the data register file 26 to store data held in an addressed source register of the data register file back to memory via the store data queue 70.

## Claims

1. A pipelined execution unit for executing instructions which identify operands and include opcode defining how the operands are to be manipulated, the execution unit comprising:
a data operand fetch stage connected to fetch operands from a data register file;
at least one execution stage connected to receive operands from the data operand fetch stage and to manipulate the operands in dependence on the opcode; and
a data write back stage connected to a data register file for writing back the results of the execution stage to the data register file,
wherein the data register file includes a plurality of ports distributed through the pipelined execution unit and has the property that a data value written into the data register file at one of said ports during a cycle of operation is available to be read from a different one of said ports in the same cycle.

2. A pipelined execution unit according to claim 1, wherein a first addressable read port is located in the data operand fetch stage and a first write port is located at the output of the execution stage so that the results of the execution stage are available to the data operand fetch stage in a single cycle of operation.

3. A pipelined execution unit according to claim 1 or 2, wherein a second write port is located at the output of the data operand fetch stage and is connected to receive data values from a load data queue which holds data values received from a main memory.

4. A pipelined execution unit according to claim 1, 2 or 3, wherein a second addressable read port is located in the execution stage to allow a result generated by manipulation of the operands in the execution stage to be put onto a store data queue which holds data values to be stored to a main memory such that the store data queue is updated in the same cycle as generation of the result by the execution stage.

5. A pipelined execution unit according to claim 4, wherein the execution stage comprises first switching circuitry arranged to selectively connect either the output of the execution stage or the output of the second addressable read port to the store data queue such that the store data queue can be simultaneously updated with the data register file when the output of the execution stage is selected.

6. A pipelined execution unit according to claim 5, wherein the first switching circuitry is responsive to a data dependency control signal.

7. An execution unit according to claim 3, which comprises a set of multiplexors connected to receive outputs of the first addressable read port and the load data queue to selectively supply a data value either from the data register file or the load data queue to the execution stage.

8. A pipelined execution unit according to any preceding claim, which includes two execution stages, a first one of which has an input connected to the data operand fetch stage and an output connected to the second execution stage, the second execution stage having an output connected to the data write back stage.

9. A pipelined execution unit according to any preceding claim, in combination with an instruction dispatch queue which holds instructions to be executed by the pipelined execution unit.

10. A pipelined execution unit in combination with an instruction dispatch queue according to claim 9, wherein operands are identified in the instructions by register addresses of the data register file.

11. A pipelined execution unit in combination with an instruction dispatch queue according to claim 9, wherein operands are contained as immediate values in the instructions.

12. A method of operating a pipelined execution unit to execute a sequence of instructions which each identify operands and include opcode defining how the operands are to be manipulated, the method comprising;
writing the result of execution of an instruction to a data register file, and fetching that result from the data register file for use as an operand in a subsequent execution cycle, wherein the result is written into the data register file and fetched from the data register file in the same execution cycle.

13. A method according to claim 12, wherein the result of execution of an instruction is simultaneously supplied to the data register file and to a store data queue which holds data values to be stored to a main memory.

14. A method of operating a pipelined execution unit to execute a sequence of instructions which each identify operands and include opcode defining how the operands are to be manipulated, in which method an operand is fetched from a load data queue which holds data values received from a main memory and supplied to an execution stage of the pipeline simultaneously with updating a data register file connected to the pipelined execution unit.

15. A method of operating a pipelined execution unit to execute a sequence of instructions which each identify operands and include opcode defining how the operands are to be manipulated, in which method the result of execution of an instruction is written to a data register file and is read out of that data register file in the same execution cycle to be stored back to memory.

16. A computer system comprising:
a pair of pipelined execution units, each pipelined execution unit being in accordance with any of claims 1 to 8, wherein the data register file is in common between the two pipelined execution units.

17. A computer system according to claim 16, wherein the pipelined execution units are connected to an instruction dispatch queue which holds instructions to be executed by the pipelined execution unit.
